# EUROPEAN PATENT APPLICATION

(11) **EP 4 035 578 A1**
(43) Date of publication of application: **03.08.2022**
(21) Application number: 20870288.6
(22) Date of filing: 22.09.2020
(51) Int. Cl.: A47J 43/046, A47J 43/07, A47J 43/08

(54) **A HOST AND A FOOD PROCESSOR**

(30) Priority: 26.09.2019 CN 201921619740 U
(71) Applicant: Zhejiang Shaoxing Supor Domestic Electrical Appliance Co., Ltd., Shaoxing, Zhejiang 312017 (CN)
(72) Inventor: YANG, Baobin, Shaoxing, Zhejiang 312017 (CN)
(74) Representative: LLR
(86) International application number: PCT/CN2020/116731
(87) International publication number: WO 2021/057701

(57) **Abstract**

A host (100) for a food processor (500) and a food processor (500) comprising the host (100) capable of achieving multiple functions. The host (100) comprises: a motor (10) comprising a motor shaft (11); a first transmission mechanism (20) cooperating with the motor shaft (11) and provided with a first output end (21); and a second transmission mechanism (30) cooperating with the motor shaft (11) and provided with a second output end (29); wherein the first transmission mechanism (20) and the second transmission mechanism (30) have different transmission ratios so that the first output end (21) and the second output end (29) output different speeds.

## Description

### Field

The present invention relates to the field of small home appliances, and in particular to a host and a food processor.

### Background

As people's level of life keeps improving, many different types of food processors have emerged in the market. The functions of a food processor can mainly include, but are not limited to, soy milk making, juicing, rice porridge making, meat grounding, shaved ice making, coffee making, and/or face mask making. Food processors can include machines that crush and mix food materials such as soy milk makers, blenders, or cell wall breaking food processors. However, existing food processors have a single function.

### Summary of the invention

An objective of the present application is to provide a host for food processors and a food processor comprising such a host capable of achieving multiple functions.

According to an aspect of the present application, a host for a food processor is provided.The host comprises: a motor comprising a motor shaft; a first transmission mechanism cooperating with the motor shaft and provided with a first output end; and a second transmission mechanism cooperating with the motor shaft and provided with a second output end; wherein the first transmission mechanism and the second transmission mechanism have different transmission ratios so that the first output end and the second output end output different speeds.

Optionally, the first output end and the second output end are coaxially arranged. Thus, the host has a compact structure, which saves space.

Optionally, the first transmission mechanism and the second transmission mechanism respectively comprise any one of the following: a synchronous belt assembly, a gear assembly, and a worm-gear assembly.

Optionally, the first transmission mechanism comprises a first synchronous wheel fixed to the motor shaft, a second synchronous wheel, a first synchronous belt, and an output shaft fixed to the second synchronous wheel and on which the first output end is arranged. Thus, transmission over a long distance can be achieved with a small volume.

Optionally, the second transmission mechanism is located above the first transmission mechanism and comprises a third synchronous wheel fixed to the motor shaft, a fourth synchronous wheel, and a second synchronous belt, the output shaft passing through the fourth synchronous wheel, a bearing being provided between the output shaft and the fourth synchronous wheel, and the second output end being arranged on the fourth synchronous wheel around the output shaft. As the second transmission mechanism is located above the first transmission mechanism, space is saved.

Optionally, the first transmission mechanism has a transmission ratio ranging from 0.5 to 3. Thus, high speed rotation of a first mixing blade assembly of a high speed blender bowl assembly can be achieved, thus achieving a cell wall breaking function.

Optionally, the second transmission mechanism has a transmission ratio ranging from 5 to 10. Thus, needs to process general food materials using a food processing bowl assembly, such as meat grounding and dough making, can be met.

Optionally, the host comprises a support comprising a first supporting portion configured to support the motor and a first through hole provided in the first supporting portion, the motor shaft extending downward from the first through hole. As the motor shaft extends downward, i.e., the motor shaft is located at a lower end of the motor, so that the first transmission mechanism and the second transmission mechanism that cooperate with the motor shaft are correspondingly located at a low position, the overall height of the food processor is small and its functioning is more stable and reliable.

Optionally, the support further comprises a second supporting portion and a second through hole provided in the second supporting portion, the output shaft passing upward through the second through hole, a bearing being provided between the second supporting portion and the output shaft. Thus, the second supporting portion can perform the function of supporting the output shaft and the two transmission mechanisms.

Optionally, a support is fixed to the second supporting portion so as to support the bearing.

Optionally, the second output end has a radial dimension larger than that of the first output end. Thus, a first mixing blade assembly and a second mixing blade assembly can cooperate respectively with the first output end and the second output end.

According to another aspect of the present application, a food processor is provided. The food processor comprises: a host as described above; a high speed blender bowl assembly that can be mounted to the host and comprises a first mixing blade assembly, the first output end being connected to and driving the first mixing blade assembly to rotate when the high speed blender bowl assembly is mounted to the host; and/or a food processing bowl assembly that can be mounted to the host and comprises a second mixing blade assembly, the second output end being connected to and driving the second mixing blade assembly to rotate when the food processing bowl assembly is mounted to the host.

In the food processor according to the present application, as the first output end and the second output end output different rotation speeds to drive the first mixing blade assembly and the second mixing blade assembly to rotate at different rotation speeds, the high speed blender bowl assembly and the food processing bowl assembly can achieve different functions, meeting different needs of a user.

### Brief description of the drawings

Fig. 1 shows an exploded view in perspective of an embodiment of the host according to the present application;
Fig. 2 shows a sectional view of the motor, the first transmission mechanism, and the second transmission mechanism shown in Fig. 1;
Fig. 3 shows a sectional view of a food processor according to the present application, wherein a food processing bowl assembly is mounted to the host;
Fig. 4 shows an enlarged view of the A part shown in Fig. 3;
Fig. 5 shows a sectional view of a food processor according to the present application, wherein a high speed blender bowl assembly is mounted to the host; and
Fig. 6 shows an enlarged view of the B part shown in Fig. 5.

### Detailed description of the embodiments

Exemplary modes of realization will be described in detail herein, which are illustrated in the accompanying drawings by way of example. When the following description refers to the drawings, the same references in different drawings refer to the same or similar elements unless otherwise indicated. The modes of realization described in the following exemplary modes of realization do not represent all modes of realization consistent with the present application. Instead, they are merely examples of means consistent with some aspects of the present application as described in detail in the appended claims.

The terms used in the present application are for the purpose of describing specific modes of realization only and are not intended to limit the present application. Unless otherwise defined, technical or scientific terms used in the present application shall have the ordinary meaning as understood by a person of ordinary skill in the art to which the present application belongs. "First" "second" and similar words used in the description and claims of the present application do not denote any order, quantity, or importance, but are only used to distinguish different components. Likewise, "a" or "an" and similar words do not denote a quantitative limitation, but rather mean the presence of at least one. "Multiple" or "a plurality of" means two or more. Unless otherwise indicated, "front," "rear," "lower," and/or "upper" and similar words are for convenience of description and are not limited to one location or one spatial orientation. "Comprise" or "include" and similar words mean that the element or object appearing before "comprise" or "include" encompasses the element or object listed after "comprise" or "include" and its equivalent, and do not exclude other elements or objects. "Connect" or "link" and similar words are not limited to a physical or mechanical connection, but may include an electrical connection, whether direct or indirect. As used in the specification and the appended claims of the present application, singular forms "a," "said," and "the" are intended to include plural forms as well, unless the context clearly indicates otherwise. It should also be understood that the term "and/or" as used herein refers to and includes any and all possible combinations of one or more of the associated listed items.

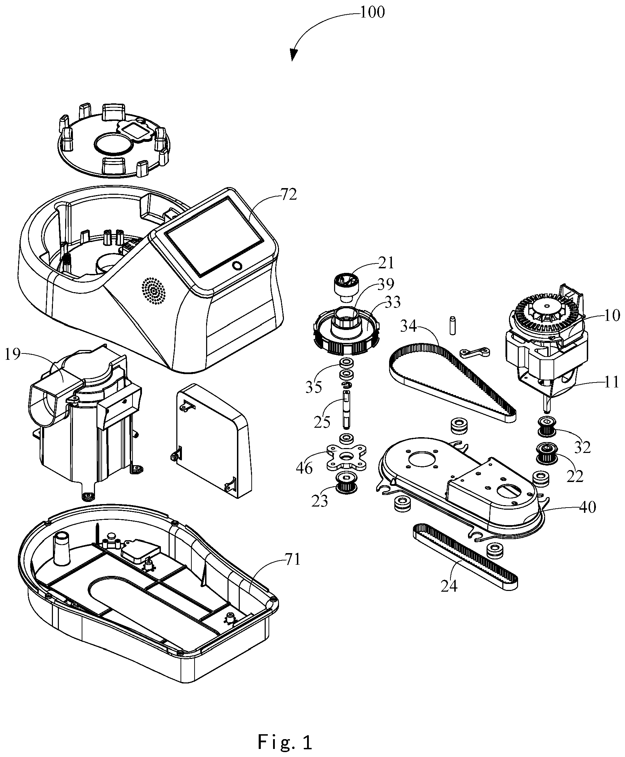

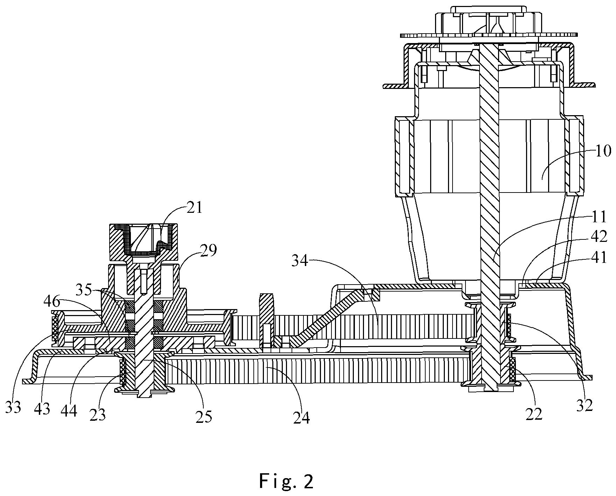

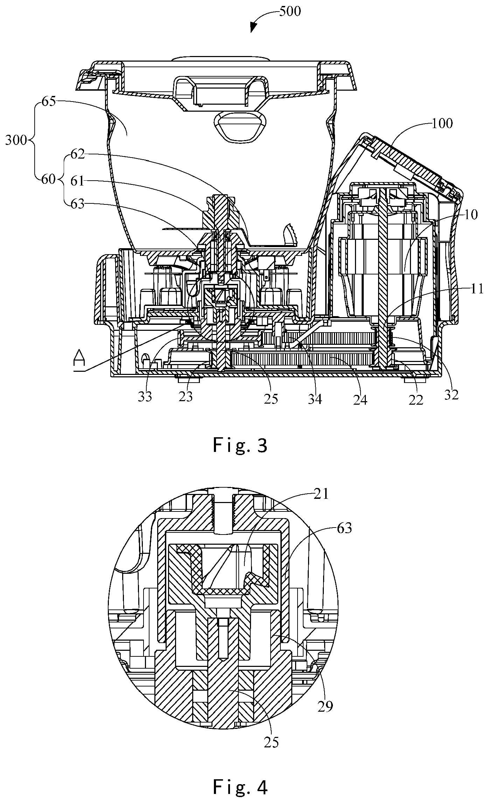

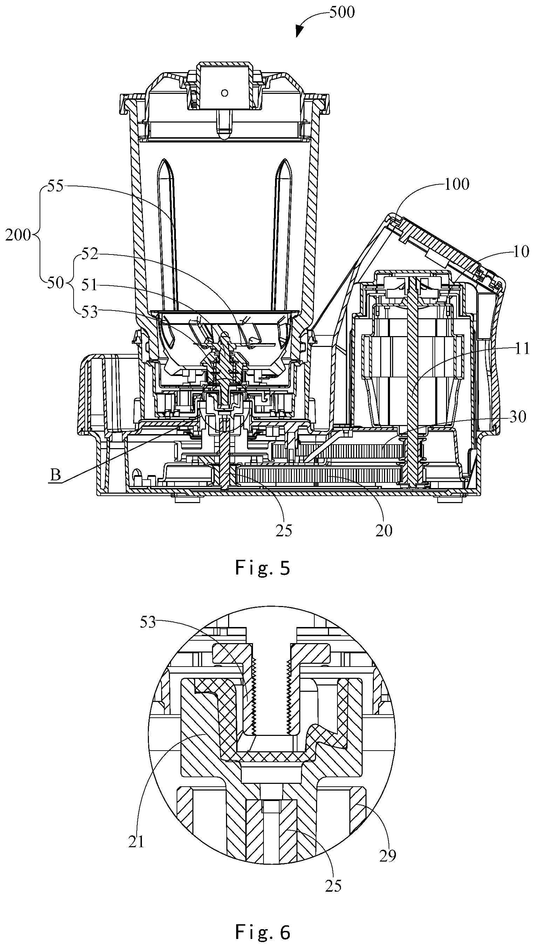

In reference to Figs. 1 to 6, the food processor 500 comprises a host 100, a high speed blender bowl assembly 200, and a food processing bowl assembly 300. The high speed blender bowl assembly 200 can be used for making soy milk, juice, etc., and the food processing bowl assembly 300 can perform rough processing, such as crushing a food material and making dough.

The host 100 comprises a base 71, a housing 72, a motor 10, a first transmission mechanism 20, and a second transmission mechanism 30. The housing 72 and the base 71 cooperate and are mounted together, and an accommodating space in which the motor 10 is mounted is formed between the housing 72 and the base 71. A motor hood 19 is provided at the outer side of the motor 10. The motor 10 comprises a motor shaft 11.

The first transmission mechanism 20 cooperates with the motor shaft 11 and is provided with a first output end 21. The second transmission mechanism 30 cooperates with the motor shaft 11 and is provided with a second output end 29. The first output end 21 and the second output end 29 are coaxially arranged, and the first transmission mechanism 20 and the second transmission mechanism 29 have different transmission ratios so that the first output end 21 and the second output end 29 output different rotation speeds.

The high speed blender bowl assembly 200 can be mounted to the host 100. The high speed blender bowl assembly 200 comprises a high speed blender bowl 55 and a first mixing blade assembly 50 provided at the bottom of the high speed blender bowl 55, the first output end 21 being connected to and driving the first mixing blade assembly 50 to rotate. Specifically, the first mixing blade assembly 50 comprises a first blade shaft 51, a blade 52 fixed to a top end of the first blade shaft 51, and a first clutch 53 fixed to a bottom end of the first blade shaft 51. When the high speed blender bowl assembly 200 is mounted to the host 100, the first clutch 53 and the first output end 21 cooperate. When the motor 10 has been turned on, the first output end 21 can drive the first mixing blade assembly 50 to rotate.

The food processing bowl assembly 300 can be mounted to the host 100. The food processing bowl assembly 300 comprises a food processing bowl 65 and a second mixing blade assembly 60 provided at the bottom of the food processing bowl 65, the second output end 29 being connected to and driving the second mixing blade assembly 60 to rotate. Specifically, the second mixing blade assembly 60 comprises a second blade shaft 61, a blade 62 fixed to a top end of the second blade shaft 61, and a second clutch 63 fixed to a bottom end of the second blade shaft 61. When the food processing bowl assembly 300 is mounted to the host 100, the second clutch 63 and the second output end 29 cooperate. When the motor 10 has been turned on, the second output end 29 can drive the second mixing blade assembly 60 to rotate.

As the first output end 21 and the second output end 29 output different rotation speeds to drive the first mixing blade assembly 50 and the second mixing blade assembly 60 to rotate at different rotation speeds, the high speed blender bowl assembly 200 and the food processing bowl assembly 300 are capable of achieving different functions, meeting different needs of a user.

The first transmission mechanism 20 and the second transmission mechanism 30 respectively comprise any one of the following: a synchronous belt assembly, a gear assembly, and a worm-gear assembly. In the mode of realization illustrated in the drawings, the first transmission mechanism 20 and the second transmission mechanism 30 are both synchronous belt assembly.

The first transmission mechanism 20 comprises a first synchronous wheel 22, a second synchronous wheel 23, a first synchronous belt 24 sleeved to the first synchronous wheel 22 and the second synchronous wheel 23, and an output shaft 25. The first synchronous wheel 22 is fixed to the motor shaft 11, the output shaft 25 is fixed to the second synchronous wheel 23, and the first output end 21 is arranged on the output shaft 25. Thus, transmission over a long distance can be achieved with a small volume.

The second transmission mechanism 30 is located above the first transmission mechanism 20 and comprises a third synchronous wheel 32 fixed to the motor shaft 11 and located above the first synchronous wheel 22, a fourth synchronous wheel 33 located above the second synchronous wheel 23, and a second synchronous belt 34 sleeved to the third synchronous wheel 32 and the fourth synchronous wheel 33, the output shaft 25 passing through the fourth synchronous wheel 33, a bearing 35 being provided between the output shaft 25 and the fourth synchronous wheel 33, and the second output end 29 being arranged on the fourth synchronous wheel 33 around the output shaft 25. As the second transmission mechanism 30 is located above the first transmission mechanism 20, space is saved.

In the above-described embodiment, the first transmission mechanism 20 and the second transmission mechanism 30 are superimposed together, and the high speed blender bowl assembly 200 and the food processing bowl assembly 300 cannot work at the same time.

In another embodiment, the first transmission mechanism 20 and the second transmission mechanism 30 are provided separately (not superimposed), and the high speed blender bowl assembly 200 and the food processing bowl assembly 300 can work at the same time.

The first transmission mechanism 20 has a transmission ratio ranging from 0.5 to 3, i.e., the ratio between the diameters of the second synchronous wheel 23 and the first synchronous wheel 22 ranges from 0.5 to 3. Thus, high speed rotation of the first mixing blade assembly 50 of the high speed blender bowl assembly 200 can be achieved, thus achieving a cell wall breaking function.

The second transmission mechanism has a transmission ratio ranging from 5 to 10, i.e., the ratio between the diameters of the fourth synchronous wheel 33 and the third synchronous wheel 32 ranges from 5 to 10. Thus, needs to process general food materials using the food processing bowl assembly 300, such as meat grounding and dough making, can be met.

The host 100 comprises a support 40 comprising a first supporting portion 41 for supporting the motor 10 and a first through hole 42 provided in the first supporting portion 41, the motor shaft 11 extending downward from the first through hole 42. As the motor shaft 11 extends downward, i.e., the motor shaft 11 is located at a lower end of the motor 10 so that the first transmission mechanism 20 and the second transmission mechanism 30 that cooperate with the motor shaft 11 are correspondingly located at a low position. Thus, the overall height of the food processor 500 is small, leading to a more stable and reliable operation. In the embodiment illustrated, the support 40 is fixed to the base 71, the motor 10 is arranged in the motor hood 19, and the motor hood 19 is fixed to the first supporting potion 41 of the support 40.

The support 40 further comprises a second supporting portion 43 and a second through hole 44 provided in the second supporting portion 43, the output shaft 25 passing upward through the second through hole 44, a bearing 35 being provided between the second supporting portion 43 and the output shaft 25. Thus, the second supporting portion 43 can perform the function of supporting the output shaft 25 and the two transmission mechanisms.

In the illustrated embodiment, a support 46 is fixed to the second supporting portion 43 so as to support the bearing 35. The support 46 comprises a cavity that cooperates with the bearing 35 and a mounting portion fixed to the second supporting portion 43 through fasteners for example. In other modes of realization, the support 46 can also be integrally formed with the second supporting portion 43.

The second output end 29 has a radial dimension larger than that of the first output end 21. Thus, the first mixing blade assembly 50 and the second mixing blade assembly 60 can cooperate respectively with the first output end 21 and the second output end 29. In the illustrated embodiment, the first output end 21 is a clutch fixed to a top end of the output shaft 25. The second output end 29 is integrally formed with the fourth synchronous wheel 33 and is ring-shaped. An outer side face of the second output end 29 cooperates with the second clutch 63 and is non-circular, and thus is capable of driving the second clutch 63 to rotate with it. In the illustrated embodiment, the outer side face of the second output end 29 comprises a plurality of planes.

What have been described above are merely preferred embodiments of the present application and are not used to limit the present application. Any modification, equivalent replacement, or improvement made within the spirit and principle of the present application shall fall within the scope of protection of the present application.

## Claims

1. A host for food processors **characterized in that** the host comprises:
a motor (10) comprising a motor shaft (11);
a first transmission mechanism (20) cooperating with the motor shaft (11) and provided with a first output end (21); and
a second transmission mechanism (30) cooperating with the motor shaft (11) and provided with a second output end (29);
wherein the first transmission mechanism (20) and the second transmission mechanism (30) have different transmission ratios so that the first output end (21) and the second output end (29) output different speeds.

2. The host according to claim 1, wherein the first output end (21) and the second output end (29) are coaxially arranged.

3. The host according to any one of preceding claims, wherein the first transmission mechanism (20) and the second transmission mechanism (30) respectively comprise any one of the following: a synchronous belt assembly, a gear assembly, and a worm-gear assembly.

4. The host according to any one of preceding claims, wherein the first transmission mechanism (20) comprises a first synchronous wheel (22), a second synchronous wheel (23), a first synchronous belt (24) and an output shaft ( 25), and wherein the first synchronous wheel (22) is fixed to the motor shaft (11), the output shaft (25) is fixed to the second synchronous wheel (23), and the first output end (21) is arranged on the output shaft (25).

5. The host according to claim 4, wherein the second transmission mechanism (30) is located above the first transmission mechanism (20) and comprises a third synchronous wheel (32), a fourth synchronous wheel (33) and a second synchronous belt (34), and wherein the third synchronous wheel (32) is fixed to the motor shaft (11), the output shaft (25) passes through the fourth synchronous wheel (33), a bearing (35) is provided between the output shaft (25) and the fourth synchronous wheel (33), and the second output end (29) is arranged on the fourth synchronous wheel (33) around the output shaft (25).

6. The host according to any one of preceding claims, wherein the first transmission mechanism (20) has a transmission ratio ranging from 0.5 to 3.

7. The host according to any one of preceding claims, wherein the second transmission mechanism (30) has a transmission ratio ranging from 5 to 10.

8. The host according to any one of preceding claims, wherein the host comprises a support (40) comprising a first supporting portion (41) configured to support the motor (10) and a first through hole (42) provided in the first supporting portion (41), the motor shaft (11) extending downward from the first through hole (42).

9. The host according to any one of claims 5 to 8, wherein the support (40) further comprises a second supporting portion (43) and a second through hole (44) provided in the second supporting portion (43), the output shaft (25) passing upward through the second through hole (44) and a bearing (35) being provided between the second supporting portion (43) and the output shaft (25).

10. The host according to claim 9, wherein a support (46) is fixed to the second supporting portion (43) to support the bearing (35).

11. The host according to any one of preceding claims, wherein the second output end (29) has a radial dimension larger than that of the first output end (21).

12. A food processor comprising:
a host according to any one of claims 1 to 11;
a high speed blender bowl assembly (200) that can be mounted to the host and comprises a first mixing blade assembly (50), the first output end (21) being connected to and driving the first mixing blade assembly (50) to rotate when the high speed blender bowl assembly (200) is mounted to the host; and/or
a food processing bowl assembly (300) that can be mounted to the host and comprises a second mixing blade assembly (60),the second output end (29) being connected to and driving the second mixing blade assembly (60) to rotate when the food processing bowl assembly (300) is mounted to the host.
